**Europäisches Patentamt**

**European Patent Office**

**Office européen des brevets**

(11) Veröffentlichungsnummer: **0 441 215 A1**

# EUROPÄISCHE PATENTANMELDUNG

(21) Anmeldenummer: **91101067.6**

(22) Anmeldetag: **28.01.91**

(51) Int. Cl.⁵: **G21C 17/112**

(30) Priorität: **09.02.90 DE 4003997**

(43) Veröffentlichungstag der Anmeldung:
**14.08.91 Patentblatt 91/33**

(84) Benannte Vertragsstaaten:
**DE ES FR SE**

(71) Anmelder: **Siemens Aktiengesellschaft**
**Wittelsbacherplatz 2**
**W-8000 München 2(DE)**

(72) Erfinder: **Krien, Konrad, Dr.**
**Anderlohstrasse 11**
**W-8520 Erlangen(DE)**
Erfinder: **Stöcker, Stephan, Dipl.-Ing.**
**Friedrichstrasse 11**
**W-8520 Erlangen(DE)**

(54) **Verfahren zur Ermittlung des Kalibrierfaktors eines Gammathermometers und Verwendung des Verfahrens.**

(57) Zur Ermittlung des Kalibrierfaktors eines Gammathermometers, das sich in einer Meßposition am oder im Kern eines Kernreaktors befindet, ist vorgesehen, daß mit auch während des Reaktorbetriebs stets fluktuierenden Prozeßvariablen (Signalrauschen) im Gammathermometer ein dem Gammafluß proportionaler und ebenfalls fluktuierender Wärmestrom $\dot{Q}$ erzeugt wird. Mit $\dot{Q}$ wird mit Hilfe von Thermoelementen eine ebenfalls fluktuierende Meßspannung $\Delta U(t)$ erzeugt, welche eine Funktion des Produktes aus fluktuierendem Wärmestrom $\dot{Q}$ und einem Kalibrierfaktor $K^*$ des Gammathermometers ist, wobei der Kalibrierfaktor $K^*$ seinerseits je nach Bauart des GAmmathermometers mit einer oder mehreren Zeitkonstanten $T^*$ des Gammathermometers zusammenhängt, so daß eine Bestimmung der Zeitkonstanten $T^*$ der Bestimmung des Kalibrierfaktors $K^*$ äquivalent ist. Zur Ermittlung des Kalibrierfaktors $K^*$ werden die regellosen und von der Amplitude her unbekannten Fluktuationen der Prozeßvariablen ausgenutzt, um in einer Verarbeitungsstufe den kalibrierfaktor $K^*$ durch Bestimmung der Zeitkonstanten $T^*$ des Gammathermometers zu ermitteln, wobei letztere durch Methoden der Rauschanalyse, angewendet auf die Meßspannung $\Delta U(t)$, erhalten werden. Das Verfahren kann mit Vorteil auch zur kontinuierlichen Ermittlung der Zeitkonstanten während des Reaktorbetriebs für ein Speed-up-Verfahren verwendet werden.

EP 0 441 215 A1

# VERFAHREN ZUR ERMITTLUNG DES KALIBRIERFAKTORS EINES GAMMATHERMOMETERS UND VERWEN-DUNG DES VERFAHRENS

Die Erfindung bezieht sich auf ein Verfahren zum Kalibrieren eines Gammathermometers, das sich in einer Meßposition am oder im Kern eines Kernreaktors befindet.

Solche Gammathermometer bestehen im allgemeinen aus einer länglichen Meßsonde mit Metallmasse einschließlich Wärmebrücke, Wärmeisolierung, Wärmesenke und aus Einfach- oder Differenzthermoelementen, wobei aufgrund eines der Reaktorleistung proportionalen Gammaflusses eine Wärmemenge pro Zeiteinheit in die Meßsonde eingebracht und ein Wärmefluß von der Metallmasse über die Wärmebrücke zur Wärmesenke hervorgerufen wird und wobei die von den Thermoelementen erfaßten Größen für Temperatur bzw. Temperaturgefälle ein Maß für die eingebrachte Wärmemenge pro Zeiteinheit sind. Es besteht ein Zusammenhang zwischen der pro Zeiteinheit eingebrachten Wärmemenge $\dot{Q}$, der mit dem Gammathermometer gemessenen Signalamplitude $\Delta U$ der Meßspannung und T*, der Zeitkonstanten des Responses auf Änderungen von $\dot{Q}$, wobei für eine einfache Geometrie eines Gammathermometers mit einer Zeitkonstanten T* gilt:

$$\Delta U = T* \frac{\dot{Q}}{F \cdot C \cdot} = K* \cdot \dot{Q},$$

wobei C, $\rho$ und F bedeuten:

C,$\rho$ = Wärmekapazität bzw. Dichte von Metallmasse einschließlich Wärmebrücke (bekannt),

F = dimensionsloser Umrechnungsfaktor (bekannt),

K* = Kalibrierfaktor, wobei bei realen Gammathermometern auch kompliziertere Zusammenhänge zwischen $\Delta U$ und Q mit mehreren Zeitkonstanten T* feststellbar sind.

Unter Gammathermometer wird hier wie im folgenden ein solches verstanden, wie es z.B. in der EP-A1-0 243 579 beschrieben ist.

Dieses besteht aus einem von einem Hüllrohr umgebenen Stab. Im Stab ist in mindestens einem Hohlraum mindestens ein Thermoelement angeordnet. Im Bereich des Thermoelements ist ein Stabteil als Gamma-Absorber und als Wärmebrücke angeordnet.

Ein anderes bekanntes Gammathermometer ist in der DE-A1-32 02 560 zusammen mit einem Kalibrierverfahren beschrieben.

Bei einem solchen Gammathermometer, wie auch bei anderen Typen, ist versucht worden, mit Hilfe von elektrischen Strömen durch ein Heizelement, welches an oder im Gammathermometer befestigt ist, eine Kalibrierung des Gammathermometers nicht nur bei Reaktorstillstand, sondern sogar beim Reaktorbetrieb zu ermöglichen.

Zum Stand der Technik der Kalibrierung von Gammathermometern im einzelnen sei auf den Tagungsband "Proceedings of a Specialist's Meeting on In Core Instrumentation and Reactor Assessment" (Tagung in Cadarache, FR, vom 07. bis 10.06.1988), herausgegeben von der Agence pour l'Energie Nucleaire, verwiesen, insbesondere die Arbeiten

- "Technology and Use of Gamma Thermometers" von F. Loisy, M. Huver und M. Janvier, S. 271 - 277 (A);
- "Speeded up Gamma Thermometer Signals for Reactor Protection Systems" von B. Sarnes, L. Magnusson, W. Puhl, K. Siegel und U. Wolff, S. 205 - 212 (B);
- "Long-term Behavior of Gamma Thermometers in a BWR" von W.O. Oosterkamp und W.H.M. Nissen, S. 278 - 284 (C).

Ferner wird verwiesen auf den Tagungsband "Nuclear Power Plant Control and Instrumentation 1982" (Tagung in München vom 11. bis 15.10.1982), herausgegeben von der IAEA, Wien 1983, und zwar die Arbeit "Le Thermometre Gamma" von M. Barbet, G. Beraud und P. Guillery, S. 547 - 561 (D).

Bei (A) wird zum Zwecke der Kalibrierung von Gammathermometern nur mit der Heizelement-Methode gearbeitet, und zwar außerhalb und innerhalb des Reaktorkerns.

Bei (B) wird ein künstliches Heizstromrauschen erzeugt, damit aufgrund eines besonderen Transformations-Verfahrens verkürzte Zeitkonstanten gewonnen und so während des Reaktorbetriebs mit den Gammathermometern die relevanten Meßwerte (Reaktorfluß) wesentlich schneller im Rahmen eines "Speed up-Verfahrens" gewonnen werden können. Hier wird also mit dem Heizstromrauschen zur Ermittlung von Zeitkonstanten gearbeitet, wogegen das Rauschen von Reaktivität, Kühlmitteltemperatur, eines Analog/Digital-Konverters und eines Verstärkers lediglich als Störgrößen betrachtet und nicht ausgenutzt werden.

In (C) findet sich - ebenso wie in (A) und (B) - die Erkenntnis des Auftretens einer Langzeit-Drift der Zeitkonstanten von Gammathermometern. In (C) wird deshalb von der Notwendigkeit der Kalibrierung in regelmäßigen Intervallen gesprochen. In dieser Arbeit werden indessen nur die Probleme angesprochen; eine während des normalen Reaktorbetriebs ausführbare Kalibriermethode wird nicht angegeben. Eine Berechnung der dreidimensionalen Flußverteilung im Reaktorkern sei, so wird dort festgestellt, zu ungenau. Es würden experimentelle Ergebnisse zu deren Überprüfung benötigt, die Experimente seien verhältnismäßig aufwendig.

Bei (D) werden thermische und nukleare Transferfaktoren $K_1$ und $K_2$ eines Gammathermometers mittels der Heizstrommethode ermittelt, um Aussagen über seine thermische und nukleare Empfindlichkeit machen zu können. Hierzu werden Kalibrierungen außerhalb und innerhalb des Reaktorkerns durchgeführt.

Wenn man die Zusammenhänge von Heizung und Signal-Amplitude und die damit verbundenen Konsequenzen näher analysiert, gelangt man zu folgenden Erkenntnissen: Die Kalibrierung ist nicht immer vollständig möglich; es ergeben sich eventuell Ungenauigkeiten. Wenn eine Kalibrierung nur auf einer Heizelement-Anregung basiert, so hat das zur Folge, daß bei Ausfall des Heizelements im Grunde das Gammathermometer als Ganzes unbrauchbar wird. Daraus ergeben sich entsprechende Folgekosten, die durch den Ersatz des Gammathermometers im Reaktor bedingt sind.

Die Informationen über die Zuverlässigkeit der Kalibrierung mittels Heizstromanregung sind stark begrenzt. Eine Überwachung der Konstanz der Kalibrierung bei Reaktorbetrieb ist nur mit hohem Aufwand und deshalb nur eingeschränkt möglich.

Ausgehend von diesen Erkenntnissen liegt der Erfindung die Aufgabe zugrunde, ein Verfahren zum Kalibrieren von Gammathermometern anzugeben, mit welchem sich die geschilderten Schwierigkeiten vermeiden lassen und mit welchem auch während des Betriebs eines Kernreaktors, insbesondere eines Leichtwasser-Kernreaktors, sich die Kalibrierung eines oder mehrerer Gammathermometer auf genaue Weise - auch ohne Anwendung einer elektrischen Aufheizung mittels Heizelements - durchführen läßt, so daß die mit dem Gammathermometer gemessenen Werte des Gammaflusses oder der proportionalen Meßwerte ein zuverlässiges Abbild der realen Verhältnisse im Kern sind.

Zur Lösung der gestellten Aufgabe ist die Erfindung dadurch gekennzeichnet,

- daß mit auch während des Reaktorbetriebs stets fluktuierenden Prozeßvariablen, wobei das Fluktuieren als ein dem Signalmittelwert der Prozeßvariablen überlagertes Signalrauschen definiert wird, im Gammathermometer ein dem Gammafluß proportionaler und ebenfalls fluktuierender Wärmestrom $\dot{Q}$ erzeugt wird,

- daß mit dem fluktuierenden Wärmestrom $\dot{Q}$ im Gammathermometer mit Hilfe von Thermoelementen eine ebenfalls fluktuierende Meßspannung $\Delta U(t)$ erzeugt wird, welche eine Funktion des Produktes aus fluktuierendem Wärmestrom $\dot{Q}$ und einem Kalibrierfaktor $K^*$ des Gammathermometers ist, wobei der Kalibrierfaktor $K^*$ seinerseits je nach Bauart des Gammathermometers mit einer oder mehreren Zeitkonstanten $T^*$ des Gammathermometers zusammenhängt, so daß eine Bestimmung der Zeitkonstanten $T^*$ der Bestimmung des Kalibrierfaktors $K^*$ äquivalent ist,

- und daß zur Ermittlung des Kalibrierfaktors $K^*$ die regellosen und von der Amplitude her unbekannten Fluktuationen der Prozeßvariablen ausgenutzt werden, um in einer Verarbeitungsstufe den Kalibrierfaktor $K^*$ durch Bestimmung der Zeitkonstanten $T^*$ des Gammathermometers zu ermitteln, wobei letztere durch Methoden der Rauschanalyse, angewendet auf die Meßspannung $\Delta U(t)$, erhalten werden.

Vorteilhafte Weiterbildungen dieses Verfahrens sind in den Patentansprüchen 2 bis 15 angegeben. Dabei beziehen sich die Ansprüche 2 bis 5 auf das grundsätzliche Verfahrensmerkmal und seine Ausgestaltungen, daß Fluktuationen der Prozeßvariablen 'Reaktivität' erfaßt werden. Eng mit diesen Fluktuationen verknüpft sind die Fluktuationen der thermohydraulischen Prozeßvariablen, insbesondere der Prozeßvariablen 'Kühlmitteltemperatur', und die Fluktuationen aufgrund von Dampfblasenbildung im Primärkühlmittel.

Die Ansprüche 6 und 7 beziehen sich auf eine Kalibriermethode, die sowohl außerhalb des Betriebs eines Kernreaktors als auch während des Betriebs eines Kernreaktors angewendet werden kann, und die darin besteht, daß die Zeitkonstante $T^*$ näherungsweise ermittelt wird auf der Grundlage künstlich erzeugter Temperaturfluktuationen im Gammathermometer, indem ein an oder in diesem befindliches Heizelement mit fluktuierendem Heizstrom beaufschlagt wird. Vorzugsweise wird der Heizstrom regellosen Fluktuationen unterworfen. Eine solche Fluktuation ist auch unter dem Begriff stochastische Fluktuation oder "Pseudo Random" bekannt. Diese Heizstrom-Fluktuationsmethode dient nur zur groben Kontrolle oder Verifikation der aufgrund der Rauschanalyse fluktuierender Prozeßvariabler ermittelten $K^*$- und $T^*$-Werte.

Gemäß Anspruch 8 kann vorteilhafterweise auch die Konstanz der Kalibrierung bzw. des Kalibrierfaktors $K^*$ überwacht werden.

Als Rauschanalyse eignet sich grundsätzlich die Fourier-Analyse. Bevorzugt wird indessen die Methode der autoregressiven (AR-) Signalanalyse angewendet, deren Ausgestaltungen in den Patentansprüchen 9 bis 12 beschrieben sind.

Eine weitere Anspruchsgruppe (Ansprüche 13 und 14) befaßt sich damit, wie die ermittelten Kalibrierfaktoren zur Kalibrierung der Meßsignale verwertet werden können.

Gemäß Anspruch 15 wird zum selektiven Erfassen des Reaktivitätsrauschens und damit zur Erleichterung und Verbesserung der Analyse der Zeitkonstanten $T^*$ und der Bestimmung des Kalibrierfaktors $K^*$ Platin ($Z = 78$) als Metallmasse und gegebenenfalls Wärmebrücke im Gammathermometer verwendet.

Gegenstand der Erfindung ist auch die Verwendung des vorbeschriebenen Verfahrens, soweit dieses die während des Reaktorbetriebs auftretenden Fluktuationen zur Ermittlung der Zeitkonstanten oder des Kalibrierfaktors ausnutzt, wie dies in einem der Ansprüche 1 bis 5 oder 9 bis 15 beschrieben ist, zur kontinuierlichen Ermittlung der Zeitkonstanten während des Reaktorbetriebs für ein Speed up-Verfahren, bei dem durch Anwendung eines Transfer-Funktions-Algorithmus auf das Zeitverhalten des jeweiligen Gammathermometers aufgrund der ermittelten Zeitkonstanten $T$, des Ausgangssignals $x_a(t)$ sowie der ersten Ableitung $\dot{x}_a(t)$ und eventuell zweiten Ableitung des Ausgangssignals des Gammathermometers ein "Speeded up-Signal" $x_s(t)$ gewonnen wird, welches z.B. durch die folgenden Gleichungen definiert ist:

a) bei einem einfachen Gammathermometer durch

$$x_s(t) = x_a(t) + T^* \cdot \dot{x}_a(t)$$

und

b) bei einem speziellen Gammathermometer mit erstem und zweitem Thermoelement bzw. Differenzthermoelement und den beiden Zeitkonstanten $T_1^*$ und $T_2^*$ und mit der zweiten Ableitung $\ddot{x}_a(t)$ des Ausgangssignals $x_a(t)$ durch

$$x_s(t) = x_a(t) + (T_1^* + T_2^*)\dot{x}_a(t) + T_1^* \cdot T_2^* \ddot{x}_a(t).$$

Ein solches Speed up-Verfahren ist in der weiter oben zitierten Literaturstelle (B) beschrieben, wobei jedoch zur kontinuierlichen Ermittlung der Zeitkonstanten lediglich das durch Heizelemente hervorgerufene Heizstromrauschen verwendet wird; das Reaktivitätsrauschen, die Kühlmitteltemperatur-Fluktuationen und so weiter werden lediglich als Störgrößen betrachtet. Gemäß der vorliegenden Erfindung kann das sogenannte Speed up-Verfahren, hinsichtlich dessen näherer Funktion ausdrücklich auf die vorgenannte Literaturstelle (B) verwiesen wird, genauer verwirklicht werden, wenn die erforderlichen Zeitkonstanten der Gammathermometer nicht durch ein Näherungsverfahren wie es nun einmal die Heizstromrausch-Methode darstellt, ermittelt werden, sondern durch die Ausnutzung des Reaktorkenngrößen-Rauschens gemäß der vorliegenden Erfindung während des normalen Reaktorbetriebs.

Im folgenden wird der Gegenstand der Erfindung anhand mehrerer, in der Zeichnung dargestellter Ausführungsbeispiele noch näher erläutert, und zwar anhand dreier Ausführungsbeispiele für ein Gammathermometer, anhand eines Diagramms für eine Pseudo-Zufalls-Heizstromanregung und anhand eines Ausführungsbeispiels für eine Kalibriereinrichtung mit einem Analyse-Gerät.

In der beiliegenden Zeichnung zeigen im einzelnen in teils schematischer, vereinfachter Darstellung:

FIG 1    ein Platin-Gammathermometer im Ausschnitt, wie es zum Einbau in einen Meßkanal eines Kernreaktors dient,

FIG 2    eine Variante zum Gamma-Thermometer nach Figur 1 in einem weiter verkleinerten Ausschnitt,

FIG 3    eine weitere Ausführungsform eines Gammathermometers im Ausschnitt,

FIG 4    ein Diagramm, in welchem Heizstrom-Intervalle i(t) mit einer Intervallbreite $\Delta t_i$ und den Maxima A über der Zeitachse t aufgetragen sind, welche zur Pseudo-Zufalls-Heizstromanregung eines zu kalibrierenden Gammathermometers dienen;

FIG 5    eine Kalibriereinrichtung für das von einem Gammathermometer abgegebene Meßsignal in Funktionsblock-Darstellung und

FIG 6    das Analyse-Gerät nach Figur 5 vergrößert im Detail, ebenfalls in Funktionsblock-Darstellung.

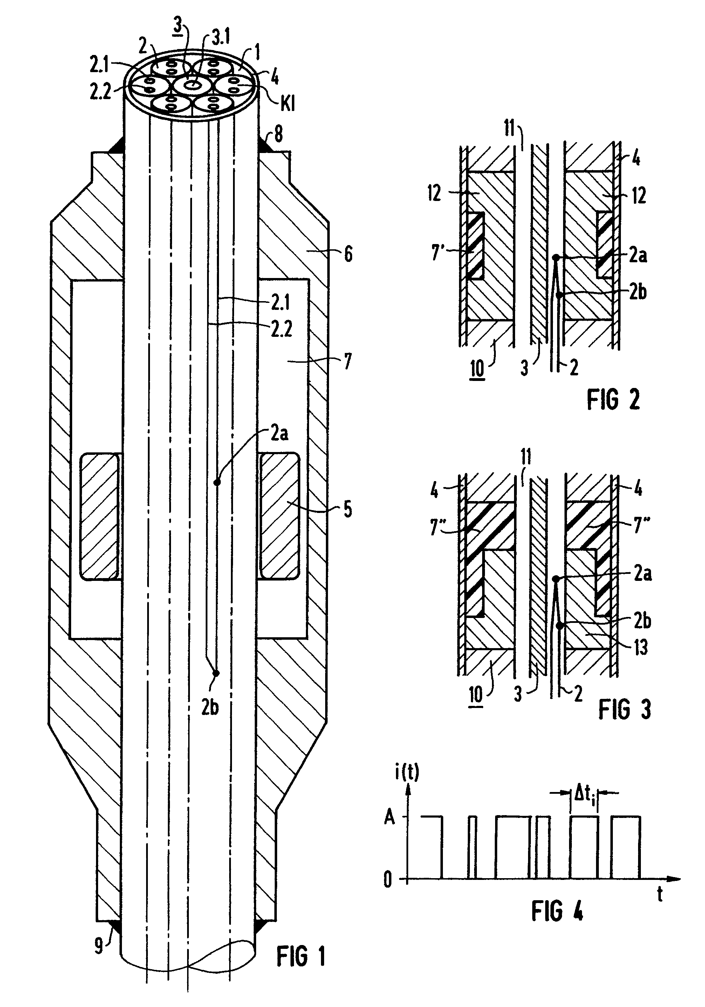

Gemäß Figur 1 besteht das Kabelbündel 1 aus sechs Ni-Cr-Ni-Thermoelementen 2 in Form zweiadriger thermoelektrischer Kabel, jeweils mit den beiden gegeneinander und nach außen isolierten Signalleitungen 2.1 und 2.2, und einem zentralen Heizkabel 3 mit Heizleiter 3.1. Die Kabel 2, 3 sind gas- und wasserdicht in einem Hüllrohr 4 aus korrosionsbeständigem Stahl untergebracht. Die Kabel-Isolierung KI umhüllt die Leiter 2.1, 2.2 und 3.1 und besteht z.B. aus $Al_2O_3$. Eines der Thermoelemente 2 ist mit seiner "heißen" Lötstelle 2a und mit seiner "kalten" Lötstelle 2b schematisch dargestellt; die Achsen der übrigen Thermoelemente

sind durch strichpunktierte Linien angedeutet. Über der heißen Lötstelle 2a des jeweiligen Thermoelements 2 ist ein hohlzylindrischer Platinkörper 5 auf den Außenumfangs des Hüllrohrs 4 aufgelötet oder an diesen angeschweißt. Ein äußerer Hüllkörper 6 schließt einen Gasraum 7, gefüllt mit z.B. 1 bar Argon, ein. Ein Teil dieses Hüllkörpers 6 ist über der kalten Lötstelle 2b ebenfalls auf den Außenumfang des Hüllrohrs 4 bzw. des Kabelbündels 1 aufgelötet oder an diesen angeschweißt. Die Verbindungsstellen von Hüllkörper 6 und Hüllrohr 1, welche mit dem Reaktorwasser in Berührung kommen, sind geschweißt, wie es an den Stellen 8 und 9 dargestellt ist.

Bei Betrieb im Reaktorkern wird die Gammastrahlung im Platinkörper 5 (die Darstellung ist nicht maßstabsgerecht, sondern nur prinzipiell) absorbiert und heizt diesen auf. Die Wärme fließt hauptsächlich in axialer Richtung über das Kabelbündel 1 und dann radial über das Hüllrohr 4 und den Hüllkörper 6 an das Kühlmedium ab. Durch den axial unsymmetrischen Aufbau des Gammathermometers fließt die Wärme im wesentlichen nur in Richtung der kalten Lötstelle 2b. Dadurch wird erreicht, daß der Einfluß des Wärmeübergangs von der Detektoroberfläche ins Kühlmedium auf die Temperatur an beiden Lötstellen gleich ist bzw. daß dieser Wärmeübergang auf die Differenztemperatur zwischen (2a) und (2b) keinen Einfluß hat. Das Signal des Gammathermometers (Detektors) ist deshalb unabhängig von Kühlbedingungen sowie Wärme- und Temperaturgradienten.

Die beiden Lötstellen 2a, 2b (und entsprechende Lötstellen bei den anderen Thermoelementen) können als Differenzthermoelement in einem Kabel, wie dargestellt, oder aber als zwei absolute Thermoelemente in zwei Kabeln aufgebaut sein. Mit den absoluten Thermoelementen lassen sich neben den Differenztemperaturen auch noch die Absoluttemperaturen bestimmen (als Füllstandsmessung bei Kühlmittelverlust).

Das Gammathermometer nach Figur 2 besteht im wesentlichen aus einem Stab 10, der von einem Hüllrohr 4 umgeben ist. In einem Kanal 11 im Inneren des Gammathermometers ist neben einem Heizkabel 3, das der Kalibrierung mit Heizstrom dient, ein Differenzthermoelement 2 mit heißer und kalter Lötstelle 2a, 2b angeordnet. Der Stab 10 besteht im Bereich des Thermoelements 2 aus Platin und im übrigen aus Stahl. Der Platinstabteil ist als Platin-Gammaabsorber-Wärmebrücke 12 innerhalb des Hüllrohrs 4 teilweise von einer rohrförmigen wärmeisolierenden Kammer 7' umgeben. Beide Meßstellen 2a, 2b des Differenzthermoelements 2 können sich im inneren Bereich der Kammer 7' befinden. Von außen einfallende Gammastrahlung bewirkt über Wechselwirkungen hauptsächlich eine Erwärmung des Teils 12. Da die Kernladungszahl und die Dichte von Platin deutlich größer sind als die Werte von Eisen, ist auch die in Platin eingebrachte Wärmemenge im Vergleich zu der in Eisen oder Stahl eingebrachten Wärmemenge sehr viel größer. Durch die Verwendung von Platin zumindest im Bereich des Differenzthermoelements 2 wird also die Empfindlichkeit des Gammathermometers stark erhöht. Die hohe Empfindlichkeit aufgrund der Materialwahl gestattet es, zur Reduzierung der Einflüsse von Leistungs- und Temperaturgradienten im Reaktorkern die Konstruktion des Gammathermometers zu ändern bzw. die Längsausdehnung zu reduzieren, ohne daß die Empfindlichkeit gegenüber bekannten Gammathermometern sinkt. Im erwärmten Teil 12 bildet sich ein Wärmefluß zur Oberfläche hin aus. Die wärmeisolierende Kammer 7' läßt im Teil 12 eine axiale Strömung entstehen, die erst außerhalb der Kammer 7' zum Hüllrohr 4 hin abbiegt. Aus der Temperaturdifferenz zwischen der Meßstelle 2a und der Vergleichsmeßstelle 2b des Differenzthermoelements 2 läßt sich der Wärmefluß in der Gamma-Absorber-Wärmebrücke 12 und daraus die eingestrahlte Gammaintensität mit geringer Fehlerbreite bestimmen. Das wärmeisolierende Material in der Kammer 7' ist entweder, wie bei Figur 1 erläutert, Argon oder ein festes Material mit kleiner Wärmeleitfähigkeit.

Im Gammathermometer nach Figur 3 sind eine Platin-Gamma-Absorber-Wärmebrücke 13 und eine wärmeisolierende Kammer 7'' axial hintereinander, teilweise überlappend, angeordnet. Die Platin-Gamma-Absorber-Wärmebrücke 13 berührt dabei nur an einer Stelle das Hüllrohr 4 und damit die Außenhaut des Gammathermometers.

Folglich fließt die durch die Gammaquanten eingebrachte Wärmemenge in einer Richtung, in Figur 3 nach unten, zum Hüllrohr 4 hin ab. Da die Platin-Gamma-Absorber-Wärmebrücke 13 und das Hüllrohr 4 nur an einer Stelle in Kontakt stehen, wird die Abhängigkeit der Meßwerte von Temperaturgradienten eliminiert. Die Kammer 7'' kann wie die Kammer 7' nach Figur 2 Argon oder ein festes Material kleiner Wärmeleitfähigkeit enthalten.

Im folgenden werden zunächst allgemeine Erläuterungen zum besseren Verständnis des Verfahrens nach der Erfindung gegeben, welches mit Gammathermometern nach Figuren 1 bis 3 ausführbar ist, und sodann werden die Pseudo-Zufalls-Heizstromanregung, eine Einrichtung zur Kalibrierung der von einem Gammathermometer abgeleiteten Meßsignale und die in letzterer enthaltene Einrichtung zur autoregressiven Signalanalyse, die zur Ableitung der Zeitkonstanten und der Kalibrierfaktoren dient, näher erläutert. Der Text ist zur besseren Übersicht in einzelne Kapitel untergliedert. Als Hintergrund-Information werden zunächst die Zusammenhänge zwischen den Signal-Amplituden und den Zeitkonstanten aufgezeigt.

1. Allgemeiner Zusammenhand zwischen Signal-Amplitude und und Zeitkonstanten beim Kalibrieren

Das Funktionsprinzip einer Gammathermometers ist bekanntlich:
Eine (durch Gammafluß eingebrachte oder durch Heizstrom erzeugte oder anders) in einem Materiestück gesammelte Wärmemenge fließt über eine Wärmebrücke zur Wärmesenke. Dabei werden Wärmeverluste (Wärmemengen, die nicht über die Brücke, sondern anders abfließen) durch geeignete Isolationen möglichst gering gehalten. Aufgrund des Wärmeflusses längst der Brücke entsteht ein Temperaturgefälle, das ein Maß für die eingebrachte Wärmemenge ist.

Aufgrund dieser Funktionsweise ist eine enge Korrelation der Zeitkonstanten, mit der Sprünge in der Wärmezufuhr meßbar sind, mit den resultierenden Veränderungen der Signal-Amplituden plausibel, z. B.: Ist die Brücke geometrisch lang und schmal, so wird ein großer Temperaturgradient entstehen (= Amplitude des Signals groß), aber es wird auch eine entsprechend lange Zeit dauern, bis sich ein neues Gleichgewicht zwischen Wärmezufuhr und Wärmeabfuhr eingestellt hat (= große Zeitkonstante).

Genauere Überlegungen für ein spezielles Gamma-Thermometer (J. S. Stutheit, "Fast-Response Gamma Thermometers", Nuclear Instruments and Methods 63 (1968), pp. 300-306) zeigen:

$$\Delta U = L^2 \dot{Q}/(2q\, K)$$
und
$$T^* = 0.466\, CL^2\, \rho\, /(q\, K)$$

mit:

| | |
|---|---|
| U = | Signal-Amplitude |
| L = | Länge der Wärmebrücke |
| $\dot{Q}$ = | pro Zeiteinheit eingebrachte Wärmemenge |
| q = | Querschnitt der Wärmebrücke (Faktor in Originalliteratur nicht berücksichtigt) |
| K = | Wärmeleitfähigkeit |
| T* = | Zeitkonstante |
| C = | Wärme-Kapazität der Metallmasse |
| $\rho$ = | Dichte der Metallmasse |

Es folgt damit auch: $\Delta U$ ist unabhängig von der Geometrie proportional zu T:

$$U = T^* \frac{\dot{Q}}{0.932\, C} = K^* \cdot \dot{Q} \quad \text{mit} \quad K^* = \frac{T^*}{0.932 \cdot C \cdot \rho}\quad,$$

wobei K* = Kalibrierfaktor und F = 0,932 (dimensionsloser Umrechungsfaktor) bei einer Wärmebrücke/Wärmemasse aus Platin gilt.

Oder anders ausgedrückt:
Eine Messung von T* ist äquivalent zur Bestimmung des Kalibrierfaktors
bzw.
eine Überwachung der Konstanz von T* entspricht einer Überwachung der Kalibrierung.

2. Zeitkonstanten bei (allgemeineren) Gammathermometern

Bei den Betrachtungen des Zusammenhangs von Signal-Amplitude und Zeitkonstante im vorigen Kapitel wurden ideale Voraussetzungen und eine stark vereinfachte Geometrie angenommen. Bei einem realen Gammathermometer (siehe Beschreibung des Gammathermometers zu Figur 1 bis 3) liegen sehr viel komplexere Verhältnisse vor:
- verschiedene Materialien an verschiedenen Stellen (Platin, Stahl, Kabel, Lot)
- verschlungenere Wege für die an verschiedenen Stellen eingebrachten Wärmemengen.

Infolgedessen messen die Thermoelemente (heiße und kalte Meßstelle) Temperaturen, die den "vorbeifließenden Wärmemengen" entsprechen, die sich als Summe aller Wärmemengen und entsprechend den Wegen ergeben. Man kann sich zu den verschiedenen Wärmemengen und Wärmewegen aber auch Zeitkonstanten zugehörig denken. Man darf allerdings nicht den Fehler machen, die Meßsignalamplituden und die Zeitkonstanten als völlig entkoppelt (insbesondere in ihrem zeitlichen Verlauf) anzunehmen. So kann sich nach einer Änderung der eingebrachten Wärmemenge durch einen eventuellen Wärmestau an einer engen Wegstrecke zur Wärmesenke dies durchaus durch eine Änderung des Signals an der heißen Meßstelle (also up-stream) vorübergehend bemerkbar machen. Unter Beachtung dieser Zusammenhänge kann man aber durchaus im Gammathermometer ablaufenden Teilprozessen auch entsprechende Zeitkonstanten zuordnen. Bei erfindungsgemäß untersuchten Gammathermometern wurde außer den zwei mit der heißen Meßstelle und der kalten Meßstelle in Zusammenhang gebrachten Zeitkonstanten eine dritte Zeitkonstante zur Erklärung der experimentellen Ergebnisse in Erwägung gezogen.

Fazit: Obwohl die Zusammenhänge zwischen den Signal-Amplituden und den Zeitkonstanten bei komplexen Instrumenten z.Z. nicht genau bekannt sind, gibt es Zusammenhänge ähnlich wie beim einfachen Modell, die zu Kalibrierzwecken herangezogen werden können.

Deshalb ist es sinnvoll, Methoden zur Bestimmung der Zeitkonstanten zu erörtern, wobei von den im folgenden diskutierten Meßmethoden die Methoden 3.2 und 3.3 deshalb besonders interessant sind, weil sie sogar ohne Heizfaden auskommen und deshalb grundsätzlich auch bei Gammathermometern anwendbar sind (d.h. Kalibrierung ermöglichen), wo die Heizmöglichkeit ausgefallen oder gar nicht erst vorgesehen ist.

## 3. Meßmethoden zur Bestimmung der Zeitkonstanten

Alle drei hier vorgeschlagenen Methoden basieren auf dem Prinzip der Noise-Analysis mit Hilfe der autoregressiven Analyse (AR-Analyse). Allen Methoden gemeinsam ist, daß sie sich während des Leistungsbetriebs der Anlage und, ohne die Funktion des Meßkanals zu beeinträchtigen, durchführen lassen. Stellte bisher das Signalrauschen für den Betrieb des Reaktors eine unerwünschte Störung dar, so wird bei der Methode nach der Erfindung gerade das Signalrauschen zu Kalibrierzwecken ausgenutzt.

### 3.1 Pseudo-Zufalls Heizstromanregung

Der Heizstrom wird als pseudo-zufälliges Telegrafen-Signal gewählt. Die Temperatur des Heizfadens hat dann - unter Vernachlässigung der Zeitkonstante des Heizfadens - ebenfalls einen pseudo-zufälligen Verlauf, vergl. Figur 4.

Die Zufallsvariable $\Delta t_i$ ist exponential-verteilt mit der Wahrscheinlichkeitsdichtefunktion

$$p_{\Delta t}(\Delta t_i) = e^{-\lambda \, \Delta t_i}$$

wobei der Mittelwert der $\Delta t_i$, $E\{\Delta t_i\} = 1/\lambda$ ist.
Die Dimension von $\lambda$ ist l/sec.
Der Mittelwert von $i(t)$ ergibt sich sofort zu

$$E\{i(t)\} = A/2 \; ;$$

Für die Autokorrelierte von $i(t)$ erhält man (vergl. Papoulis, "Probability, Random Variables, and Stochastic Processes, Second Edition, 1985, S. 212):

$$\phi_{ii}(\tau) = E\{i(t)\, i(t-\tau)\} = A^2/4 + A^2/2 \, e^{-2\lambda |\tau|}$$

und damit für das Leistungs-Dichtespektrum von $i(t)$:

$$\phi_{ii}(\omega) = \mathcal{F}\{\phi_{ii}(\tau)\} = A^2/4 \; \delta_0(\omega) + \frac{A^2/2}{1 + \omega^2/4\lambda^2}$$

wobei = Zeit [sec].
Die Übertragungsfunktion des Sensor-Elements von der Heizstrom-Anregung zum Anzeigesignal $u(t)$ wird durch ein System 1. Ordnung beschrieben:

$$H_S(j\omega) = \frac{\epsilon}{1 + j\omega T^*}$$

$\epsilon$ : Übertragungsfaktor von Heizstrom zu Meßspannung

Wählt man l/λ sehr viel kleiner als die Sensor-Zeitkonstante T*, so ergibt sich - innerhalb der Sensor-Bandbreite - eine näherungsweise zeitlich unkorrelierte - also weiße - Anregung. Für die Autokorrelierte von i(t) kann man dann näherungsweise schreiben:

$$\phi_{ii}(\tau) = A^2/4 + A^2/2 \, \delta_0(\tau)$$

Unter Berücksichtigung der Tatsache, daß gilt:

$$\int_{-\infty}^{+\infty} \delta_0(t) \, dt = 1 \cdot [t] \; ;$$

[t] : Dimension der Zeit t
erhält man für das Leistungs-Dichte-Spektrum von i(t):

$$\phi_{ii}(\omega) = \mathcal{F}\{\phi_{ii}(\tau)\} = A^2/4 \, \delta_0(\omega) + A^2/2 \cdot [t] \, .$$

Das Leistungs-Dichte-Spektrum des durch das Heizsignal verursachten Anteils des Anzeigesignals u(t) ergibt sich damit zu:

$$\phi_{uu}(\omega) = \phi_{ii}(\omega) \cdot |H_s(j^\omega)|^2 =$$

$$(A^2/4 \, \delta_0(\omega) + A^2/2 \cdot [t]) \cdot \frac{\epsilon^2}{1 + \omega^2 \, T^{*2}}$$

Die Gesamtleistung des durch das Heizsignal im Anzeigesignal verursachten Anteils ergibt sich dann als Integral über das Leistungs-Dichte-Spektrum von u(t) zu:

$$E\{u^2(t)\} = \mu^2_u + \sigma^2_u = \frac{1}{2\pi} \int_{-\infty}^{+\infty} \phi_{uu}(\omega) \, d\omega =$$

$$\underbrace{A^2/4 \, \epsilon^2}_{\mu^2_u} + \underbrace{\frac{A^2/2 \cdot \epsilon^2 \cdot [t]}{2 \, T}}_{\sigma^2_u}$$

Der Mittelwert von i(t) bewirkt einen konstanten, aber bekannten, Temperaturbeitrag zum Meßsignal des Gamma-Thermometers, und damit einen Anzeige-Offset $\mu_u$, der aber nachträglich wieder subtrahiert werden kann. Die durch das Heizsignal im Anzeigesignal erzeugte Varianz ist $\sigma^2_u$. Durch Einsetzen von typischen Zahlenwerten lassen sich beide Werte quantifizieren:

$$A = 10 \text{ Ampere}$$

$$\in = \frac{20 \text{ K}}{10 \text{ Ampere}} \quad 40 \text{ }\mu\text{V/K}; \quad \Longrightarrow \quad \underline{\mu_u = 400 \text{ }\mu\text{V}} \quad ;$$

$$T^* = 15 \text{ s} ; \qquad \Longrightarrow \sigma_u^2 = 10700 \text{ }(\mu\text{V})^2 ; \quad \sigma_u = 103 \text{ }\mu\text{V} ;$$

$$[t] = \text{sec};$$

Damit ist gezeigt, daß man unter realistischen Annahmen auf diese Weise einen auswertbaren Meßeffekt erreicht. Die durch die Heizstromanregung bewirkte Fluktuation des Sensor-Signals kann nun verwendet werden, um mit Hilfe von AR-Analyse die Sensor-Zeitkonstante $T^*$ zu bestimmen. Erfahrungen mit der AR-Analyse verschiedener Temperatur-Signale zeigen, daß ein Datensatz von ca. 4000 Werten benötigt wird. Die Abtastzeit $T_A$ muß dabei ca. 1/10 bis 1/40 der Sensor-Zeitkonstante betragen. Die Sensor-Zeitkonstante T beträgt hier typisch 15 s. Damit ergibt sich eine gesamte Meßdauer von ca.

4000 $T_A$
= 4000·( 1/10 ... 1/40 ) · $T^*$
= 4000·( 1/10 ... 1/40 ) · 15 s = 100 .. 25 min.

### 3.2. Auswertung der Anregung durch Kühlmittel-Temperatur-Schwankungen

Statt einer künstlichen Anregung durch einen Heizstrom kann auch die immer vorhandene Anregung durch Schwankungen der Kühlmitteltemperatur ausgenutzt werden. Wenn die Kühlmittel-Temperatur-Schwankungen im Vergleich zur Sensor-Bandbreite nahezu zeitlich unkorreliert sind, ist die Voraussetzung einer weißen Anregung hinreichend gut erfüllt. Für die Wahl der Abtastzeit und die Aufzeichnungsdauer gilt das oben Gesagte.

Die Fluktuationen im Sensor-Ausgangssignal können dann ebenfalls wieder mit AR-Analyse analysiert werden und die Sensor-Zeitkonstante geschätzt werden. Die Voraussetzung einer näherungsweisen weißen Anregung durch Kühlmittel-Temperatur-Schwankungen bei einem des Gamma-Thermometer sind erfüllt.

Diese Methode funktioniert besonders gut bei der kalten Meßstelle des Gamma-Thermometers, die dem Kühlmittel am stärksten ausgesetzt ist.

### 3.3 Auswertung der Anregung durch Schwankungen des Gamma-Flusses

Prinzipiell ist auch die Anregung des Gamma-Thermometers durch Fluktuation des Gamma-Flusses für die AR-Analyse auswertbar. Diese Anregung muß die Voraussetzung eines innerhalb der Sensor-Bandbreite näherungsweise weißen Leistungsdichtespektrums erfüllen, und von ihrer Leistung (Amplitude) her ausreichen, um zu auswertbaren Fluktuationen des Sensor-Ausgangssignals zu führen. Wenn die heiße Meßstelle Gammafluß-Fluktuationen - eventuell bei Teillastbetrieb - ausreichend nachweist, ergibt sich eine gute direkte Kalibrierung durch die Bestimmung der damit assoziierten Zeitkonstante.

Die kleine Amplitude der Fluktuationen kann dadurch gut ausgeglichen werden, daß man sehr lange mißt. Dies ist bei der hier vorgeschlagenen Methode deshalb leichter möglich, weil die Funktion der Sensoren durch die Kalibrierungsmessung (ohne Heizstrom) überhaupt nicht beeinträchtigt wird.

Wünscht man eine Kalibrierung speziell durch Schwankungen des Gammaflusses, so lassen sich die Leistung und ihr Einfluß auf das Kalibrierverfahren verstärken, indem man Meßkörper und Teile der Wärmebrücke aus Platin fertigt, weil dadurch die Wechselwirkungen mit der Gammastrahlung verstärkt werden.

Für die Wahl der Abtastzeit und der Aufzeichnungsdauer gilt dasselbe wie in den vorangegangenen Abschnitten.

### 4. Einflußgrößen

### 4.1 Einfluß der Thermoelemente auf das Meßsignal

Die Problematik des Einflusses der Positionierung der Lötstellen oder der Veränderung der Eigenschaften im Betrieb sollte mit den drei Methoden der Bestimmung der Zeitkonstanten gut überwacht werden können. Für diese Überwachung und um Effekte (Zeitkonstanten) besser zuordnen zu können (siehe auch unten), sollten einfache Thermoelemente und nicht Differenzthermoelemente benutzt werden, also mindestens je eines für die "heiße" und die "kalte" Meßstelle.

Insbesondere für eine online-Überwachung ohne Störung des Reaktorbetriebs bieten sich die Analysemethoden des Rauschens nach 3.2 und 3.3 an

4.2 Einfluß des Gammaspektrums auf das Meßsignal

Was die Problematik des Gammaspektrums in Abhängigkeit vom Dampfblasengehalt und Abbrand angeht, so können sich Einflüsse des Dampfblasengehalts auch auf die Kühlung, insbesondere der kalten Meßstelle, bemerkbar machen und daher durch eine Analyse der Zeitkonstanten meßbar werden.

Das bedeutet, daß bei Verwendung getrennter Thermoelemente mit entsprechenden Fluktuationsanalysen auch die Effekte separierbar sind und damit im Endeffekt leichter berücksichtigt werden können.

5. Besondere Vorteile

Die Messung von Zeitkonstanten mit Hilfe der Fluktuationen an der heißen Meßstelle (Ausnutzung von Schwankungen des Gammaflusses) ergibt eine wirkliche, direkte Kalibriermöglichkeit gerade on-line, insbesondere auch ohne die Notwendigkeit des Heizelementes.

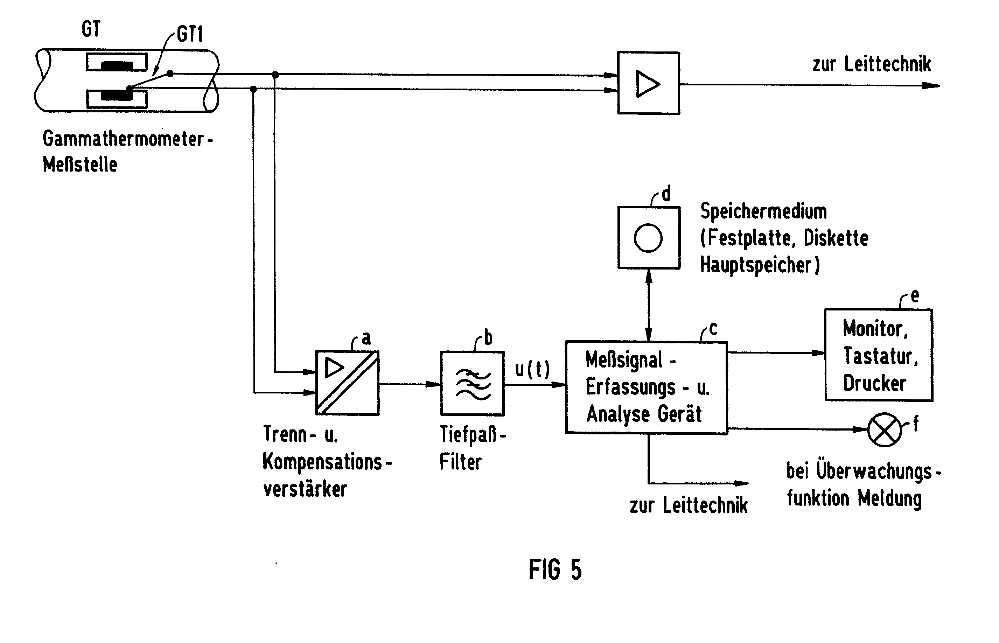

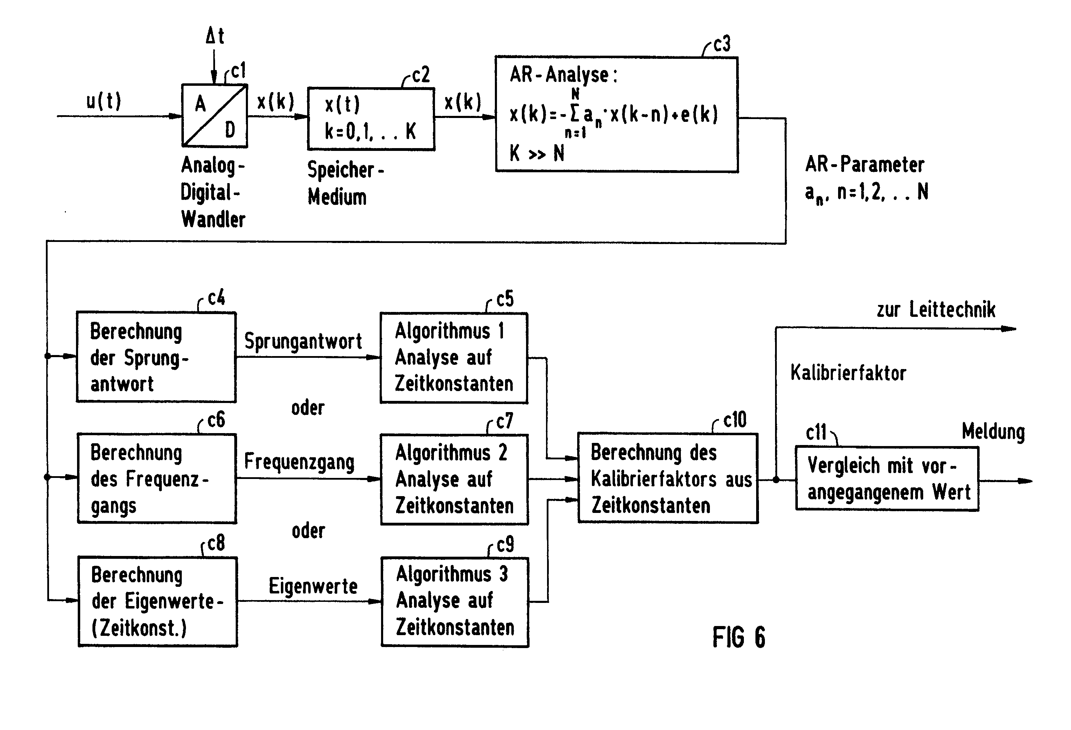

6. Kalibriereinrichtung nach Figuren 5 und 6

Im Beispiel nach Figur 5 ist ein Gammathermometer, wie es anhand der Figuren 1 bis 3 erläutert wurde, oder ein anderes geeignetes Gammathermometer verwendet und generell mit GT bezeichnet. Die zugehörige Gammathermometer-Meßstelle, auf die es im vorliegenden Fall ankommt, ist mit GT1 bezeichnet.

Das Spannungssignal der Gammathermometer-Meßstelle GT1 wird über den Trenn- und Kompensationsverstärker (a) aus dem für die Leittechnik relevanten Signalpfad ausgeblendet. (a) hat drei Funktionen: Galvanische Trennung der Leittechnik (evtl. sicherheitsrelevant) von der Kalibriereinrichtung, Kompensation des Gleichanteils des Meßsignals durch Addition einer konstanten, einstellbaren Kompensationsspannung und Verstärkung des verbleibenden Wechselanteils für eine optimale Aussteuerung der nachfolgenden Geräte. Der verbleibende Wechselanteil ist durch Gammafluß- und/oder Kühlmittelfluktuationen bedingt. Das Tiefpaß-Filter (b) dient zur Bandbegrenzung des Signals, um bei der nachfolgenden Digitalisierung Fehler durch Überfaltungen im Frequenzbereich zu vermeiden. Die Grenzfrequenz des Tiefpaß-Filters ist dazu kleiner als die halbe Abtastfrequenz zu wählen. Das Meßsignal-Erfassungs- und Analyse-Gerät (c) führt zunächst eine Digitalisierung des analogen Signals u(t) über einen bestimmten Zeitraum durch und speichert die Daten in einem Speichermedium, z.B. Rechner-Hauptspeicher, Festplatte oder Diskette d. Anschließend kann die Analyse der Daten durchgeführt und der Kalibrierfaktor für die Meßstelle bestimmt werden. Für die Anzeige und Bedienung sind Tastatur, Monitor und ein Drucker e vorgesehen. Wird eine Überwachung der Kalibrierung vorgesehen, so erfolgt bei Veränderung des Kalibrierfaktors die Ausgabe einer Meldung, z.B. über eine Lampe f in der Warte, oder das Ausblenden des Meßsignals aus der Reaktor-Überwachung oder auch eine automatische Anpassung des Verstärkungsfaktors des Gammathermometer-Nutzsignals entsprechend dem neuen Kalibrierfaktor.

Die Signalverarbeitung im Meßsignal-Erfassungs- und -Analysegerät c erfolgt gemäß Diagramm nach Figur 6 in folgenden Schritten: Das analoge Signal u(t) wird zunächst über einen Analog-Digital-Wandler cl in zyklischen Zeitabständen von $T_A$ digitalisiert.

Die Abtastzeit $T_A$ beträgt dabei etwa 1/40 bis 1/10 der kleinsten Zeitkonstanten der Meßstelle. Es wird eine Anzahl von K Datenpunkten x(k), k = 0,1, ... , K digitalisiert und in einem Speicher c2 gespeichert. K ist dabei ca. 4000. Nach Abschluß der Datenerfassung werden die Daten aus dem Speicher gelesen und eine AR-Analyse durchgeführt (c3). Dazu werden die Daten x(k) durch ein auto-regressives Modell der Ordnung N modelliert:

$$x(k) \;=\; -\sum_{n=1}^{N} a_n \cdot x(k-n) \;+\; e(k) \;;\qquad k = N,\; N+1,\; \ldots\; K-1$$

Die AR-Parameter $a_n$, $n = 1, 2, \ldots, N$ sind so zu bestimmen, daß die Leistung des Prädiktionsfehlers $e(k)$ minimiert wird:

$$\sum_{k=N}^{K-1} e(k)^2 \;\overset{!}{=}\; \overset{min}{\underset{a_n}{}},\; n=1,\; 2,\; \ldots,\; N$$

Die Modellordnung $N$ ist sehr viel kleiner als die Anzahl der Datenpunkte $K$ zu wählen.

Um aus den AR-Parametern die Zeitkonstanten der Meßstelle zu bestimmen, bestehen drei alternative Möglichkeiten:

Aus den AR-Parametern $a_n$, $n = 1, 2, \ldots, N$ kann die Sprungantwort der Meßstelle $h_{-1}(k)$ mit der Beziehung:

$$h_{-1}(k) \;=\; \begin{cases} -\displaystyle\sum_{n=1}^{N} a_n \cdot h_{-1}(k-n) \;+\; 1 & \text{für } k \geqq 0; \\[2em] 0 & \text{für } k < 0; \end{cases}$$

bestimmt werden (c4). Die Zeitkonstanten können daher aus der Sprungantwort, z.B. durch Least-Square-Fit mit Exponentialfunktionen, bestimmt werden (c5).

Alternativ können die Zeitkonstanten aus dem Frequenzgang bestimmt werden. Dazu wird zunächst der Betrags-Frequenzgang der Meßstelle - bis auf eine multiplikative Konstante - aus den AR-Parametern bestimmt (c6):

$$\left| H\left(e^{j\Omega}\right) \right| \;=\; \frac{1}{\left| 1 + \displaystyle\sum_{n=1}^{N} a_n \cdot e^{-j\Omega \cdot n} \right|}\;;$$

Aus dem Betragsfrequenzgang können dann in (c7) die Knickstellen und damit die Zeitkonstanten ermittelt werden.

Die eleganteste Methode besteht darin, zunächst die Eigenwerte der Meßstelle im zeitdiskreten Frequenzbereich zu bestimmen. Dazu werden die Nullstellen in $z$ des Polynoms

$$E(z) \;=\; 1 \;+\; \sum_{n=1}^{N} a_n \cdot z^{-n}$$

bestimmt (c8). Diese Nullstellen sind bekanntlich genau die Eigenwerte des Systems. Aus den Eigenwerten $z_{\infty\nu}$, $\nu = 1, 2, \ldots, N$ werden dann in (c9) mit Hilfe der bilinearen Transformation die entsprechenden Eigenwerte im zeitkontinuierlichen Frequenzbereich, $s_{\infty\nu}$, $\nu = 1, 2, \ldots, N$, berechnet. Die Zeitkonstanten ergeben sich dann unmittelbar als die Kehrwerte der reellen Eigenwerte $s_{\infty\nu}$.

Mit Kenntnis der Zeitkonstanten wird dann in (c10) der Kalibrierfaktor des Gammathermometers oder des Meßkanals mit Hilfe der bereits weiter vorne angegebenen Beziehung bestimmt. Dieser Kalibrierfaktor kann nun zu einer entsprechenden Einstellung des Meßverstärkers für den betrachteten Meßkanal verwendet werden. Soll die Kalibriereinrichtung eine Überwachung auf Konstanz des Kalbrierfaktors durchführen, so wird in (c11) ein Vergleich des aktuell ermittelten Kalibrierfaktors mit einem oder mehreren früher ermittelten Kalibrierfaktoren durchgeführt. Bei einer unzulässig großen Abweichung zwischen diesen Werten wird dann eine Meldung erzeugt, die an geeigneter Stelle, z.B. in der Warte, angezeigt wird.

**Patentansprüche**

1. Verfahren zur Ermittlung des Kalibrierfaktors eines Gammathermometers, das sich in einer Meßposition am oder im Kern eines Kernreaktors befindet, mit den weiteren Merkmalen,

   - daß mit auch während des Reaktorbetriebs stets fluktuierenden Prozeßvariablen, wobei das Fluktuieren als ein dem Signalmittelwert der Prozeßvariablen überlagertes Signalrauschen definiert wird, im Gammathermometer ein dem Gammafluß proportionaler und ebenfalls fluktuierender Wärmestrom $\dot{Q}$ erzeugt wird,

   - daß mit dem fluktuierenden Wärmestrom $\dot{Q}$ im Gammathermometer mit Hilfe von Thermoelementen eine ebenfalls fluktuierende Meßspannung $\Delta U(t)$ erzeugt wird, welche eine Funktion des Produktes aus fluktuierendem Wärmestrom $\dot{Q}$ und einem Kalibrierfaktor $K^*$ des Gammathermometers ist, wobei der Kalibrierfaktor $K^*$ seinerseits je nach Bauart des Gammathermometers mit einer oder mehreren Zeitkonstanten $T^*$ des Gammathermometers zusammenhängt, so daß eine Bestimmung der Zeitkonstanten $T^*$ der Bestimmung des Kalibrierfaktors $K^*$ äquivalent ist,

   - und daß zur Ermittlung des Kalibrierfaktors $K^*$ die regellosen und von der Amplitude her unbekannten Fluktuationen der Prozeßvariablen ausgenutzt werden, um in einer Verarbeitungsstufe den Kalibrierfaktor $K^*$ durch Bestimmung der Zeitkonstanten $T^*$ des Gammathermometers zu ermitteln, wobei letztere durch Methoden der Rauschanalyse, angewendet auf die Meßspannung $\Delta U(t)$, erhalten werden.

2. Verfahren nach Anspruch 1,
   **dadurch gekennzeichnet,** daß Fluktuationen der Prozeßvariablen 'Reaktivität' erfaßt werden.

3. Verfahren nach Anspruch 1 oder 2,
   **dadurch gekennzeichnet,** daß Fluktuationen der thermohydraulischen Prozeßvariablen im Reaktorkühlmittel erfaßt werden.

4. Verfahren nach einem der Ansprüche 1 bis 3,
   **dadurch gekennzeichnet,** daß Fluktuationen der Prozeßvariablen 'Kühlmitteltemperatur' erfaßt werden.

5. Verfahren nach einem der Ansprüche 1 bis 4,
   **dadurch gekennzeichnet,** daß Fluktuationen aufgrund der Dampfblasenbildung im Reaktorkühlmittel erfaßt werden.

6. Verfahren nach Anspruch 1,
   **dadurch gekennzeichnet,** daß die Zeitkonstanten $T^*$ näherungsweise ermittelt werden auf der Grundlage künstlich erzeugter Temperaturfluktuationen im Gammathermometer, indem ein an oder in diesem befindliches Heizelement mit fluktuierendem Heizstrom beaufschlagt wird.

7. Verfahren nach Anspruch 6,
   **dadurch gekennzeichnet,** daß der Heizstrom regellosen Fluktuationen unterworfen wird.

8. Verfahren nach einem der Ansprüche 1 bis 7,
   **dadurch gekennzeichnet,** daß die Konstanz der Kalibrierung bzw. des Kalibrierfaktors $K^*$ überwacht wird.

9. Verfahren nach einem der Ansprüche 1 bis 8,
   **dadurch gekennzeichnet,** daß ein analoges Meßsignal u(t) für die Signalamplitude $\Delta U$ der fluktuierenden Meßspannung $\Delta U(t)$ zunächst A/D-gewandelt wird und daß die digitalisierten Werte x(k) des Meßsignals u(t) einer autoregressiven Analyse unterworfen werden, so daß die AR-Parameter $a_n$, n = 1, 2, 3 ... N erhalten werden, wobei "AR-Parameter" die aufgrund der Autoregressions-Analyse erhaltenen Parameter bedeutet und wobei diese AR-Parameter die Eingangsgrößen für die Ermittlung wenigstens einer der folgenden Größen bilden: Zeitkonstanten T*, Kalibrierfaktor K*, Konstanz des Kalibrierfaktors K* über der Zeit oder Konstanz einer Zeitkonstanten T* über der Zeit.

10. Verfahren nach Anspruch 9,
**dadurch gekennzeichnet,** daß die AR-Parameter einer Meßstelle zur Berechnung der Sprungantwort $h_{-1}$ (k) zugeleitet werden, daß aufgrund der Sprungantwort eine Analyse auf Zeitkonstanten T* und anschließend eine Berechnung des Kalibrierfaktors K* aufgrund der ermittelten Zeitkonstanten T* durchgeführt wird.

11. Verfahren nach Anspruch 9,
**dadurch gekennzeichnet,** daß die AR-Parameter einer Meßstelle zur Berechnung des Frequenzgangs zugeleitet werden, indem zunächst der Betragsfrequenzgang - bis auf eine multiplikative Konstante - aus den AR-Parametern bestimmt wird:

$$| H (e^{j\Omega}) | = \frac{1}{| 1 + \sum_{n=1}^{N} a_n \cdot e^{-j\Omega \cdot n} |}$$

und daß aus dem Betragsfrequenzgang die Knickstellen und damit die Zeitkonstanten T* und der Kalibrierfaktor K* ermittelt werden.

12. Verfahren nach Anspruch 9,
**dadurch gekennzeichnet,** daß die AR-Parameter einer Meßstelle zur Ermittlung der Eigenwerte im zeitdiskreten Frequenzbereich zugeführt werden und daß hierzu die Nullstellen in z des Polynoms

$$E (z) = 1 + \sum_{n=1}^{N} a_n \cdot z^{-n}$$

bestimmt werden, welche identisch sind mit den Eigenwerten des Systems, daß aus den Eigenwerten ($z_{\infty\nu}$), $\nu$ = 1, 2, 3 ... N dann mittels der bilinearen Transformation die entsprechenden Eigenwerte im zeitkontinuierlichen Frequenzbereich $s_{\infty\nu}$ , $\nu$ = 1, 2, 3 ... N ermittelt werden und daß die Zeitkonstanten T* durch Kehrwertbildung aus den reellen Eigenwerten ($s_{\infty\nu}$) und daraus der Kalibrierfaktor K* ermittelt wird.

13. Verfahren nach einem der Ansprüche 8 bis 12,
**dadurch gekennzeichnet,** daß der ermittelte Kalibrierfaktor K* einem Meßverstärker zugeleitet wird, der zur Verstärkung des vom Ausgang des Gammathermometers über einen Meßkanal dem Meßverstärker zugeführten Eingangs-Meßsignals dient, wobei das den Reaktorleiteinrichtungen vom Meßverstärker zugeführte Ausgangs-Meßsignal durch den Meßverstärker entsprechend der Größe des Kalibrierfaktors eingestellt wird.

14. Verfahren nach einem der Ansprüche 8 bis 13,
**dadurch gekennzeichnet,** daß in einer Vergleicherstufe ein Vergleich des jeweils ermittelten Kalibrierfaktors K* zum Zeitpunkt (t + $t_1$) mit dem jeweils vorangegangenen Kalibrierfaktor K* zum Zeitpunkt t vorgenommen wird und daß bei einer Abweichung des späteren Wertes vom früheren Wert, die ein vorgegebenes Maximum überschreitet, eine Meldung an die Warte gegeben wird.

15. Verfahren nach einem der Ansprüche 1 bis 5, oder 8 bis 15,
**dadurch gekennzeichnet,** daß zur besonders selektiven Erfassung des Reaktivitätsrauschens und damit zur Erleichterung und Verbesserung der Analyse der Zeitkonstanten T* und der Bestimmung des Kalibrierfaktors K* Platin als Metallmasse und gegebenenfalls Wärmebrücke des Gammathermometers verwendet wird.

16. Verwendung des Verfahrens nach einem der Ansprüche 1 bis 5, 9 bis 15 zur kontinuierlichen Ermittlung der Zeitkonstanten während des Reaktorbetriebs für ein Speed-up-Verfahren, bei dem durch Anwendung eines Transfer-Funktions-Algorithmus auf das Zeitverhalten des jeweiligen Gammathermometers aufgrund der ermittelten Zeitkonstanten $T^*$, des Ausgangssignals $x_a(t)$ sowie der ersten Ablei-tung $\dot{x}_a(t)$ und eventuell zweiten Ableitung des Ausgangssignals des Gammathermometers ein "Speeded up-Signal" $x_s(t)$ gewonnen wird, welches z.B. durch die folgenden Gleichungen definiert ist:
a) bei einem einfachen Gammathermometer durch

$$x_s(t) = x_a(t) + T^* \cdot \dot{x}_a(t)$$

und

b) bei spezielleren Gammathermometern mit erstem und zweitem Thermoelement bzw. Differenzthermoelement und den beiden Zeitkonstanten $T_1^*$ und $T_2^*$ durch

$$x_s(t) = x_a(t) + (T_1^* + T_2^*)\dot{x}_a(t) + T_1^* \cdot T_2^* \ddot{x}_a(t).$$

FIG 1

FIG 2

FIG 3

FIG 4

GT
GT1
Gammathermometer - Meßstelle

zur Leittechnik

d
Speichermedium
(Festplatte, Diskette
Hauptspeicher)

e
Monitor,
Tastatur,
Drucker

a
Trenn- u.
Kompensationsverstärker

b
Tiefpaß-
Filter

u(t)

c
Meßsignal -
Erfassungs - u.
Analyse Gerät

f
bei Überwachungsfunktion Meldung

zur Leittechnik

FIG 5

EP 0 441 215 A1

EP 0 441 215 A1

$\Delta t$

u(t)

| A |
| D |
c1

Analog-
Digital-
Wandler

x(k)

x(t)
k=0,1,..K
c2

Speicher-
Medium

x(k)

AR-Analyse:
$$x(k) = -\sum_{n=1}^{N} a_n \cdot x(k-n) + e(k)$$
$K \gg N$
c3

AR-Parameter
$a_n$, n=1,2,... N

Berechnung
der Sprungantwort
c4

Sprungantwort

Algorithmus 1
Analyse auf
Zeitkonstanten
c5

oder

Berechnung
des Frequenzgangs
c6

Frequenzgang

Algorithmus 2
Analyse auf
Zeitkonstanten
c7

oder

Berechnung
der Eigenwerte-
(Zeitkonst.)
c8

Eigenwerte

Algorithmus 3
Analyse auf
Zeitkonstanten
c9

Berechnung des
Kalibrierfaktors aus
Zeitkonstanten
c10

zur Leittechnik

Kalibrierfaktor

Vergleich mit vorangegangenem Wert
c11

Meldung

FIG 6

Europäisches
Patentamt

**EUROPÄISCHER RECHERCHENBERICHT**

Nummer der Anmeldung

**EP 91 10 1067**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | GB-A-2 092 300 (EDF)<br>* Seite 1, Zeilen 60-75,103-121; Seite 2, Zeilen 34-68; Seite 2, Zeile 91 - Seite 3, Zeile 20; Abbildungen 1-2 *<br>– – – | 1,15 | G 21 C 17/112 |
| A | US-A-4 634 570 (JACQUOT et al.)<br>* Spalte 1, Zeile 57 - Spalte 2, Zeile 6; Spalte 3, Zeile 19 - Spalte 4, Zeile 11; Abbildungen 1-2 *<br>– – – | 1,15-16 | |
| A | US-A-4 393 025 (LEYSE)<br>* Spalte 5, Zeile 65 - Spalte 8, Zeile 8 *<br>– – – | 1 | |
| A | EP-A-0 322 541 (MITSUBISHI)<br>* Seite 4, Zeilen 12-32 *<br>– – – | 9 | |
| D,A | EP-A-0 243 579 (SIEMENS)<br>* Zusammenfassung *<br>– – – – – | 15 | |

| | RECHERCHIERTE SACHGEBIETE (Int. Cl.5) |
|---|---|
| | G 21 C 17/00 |

Der vorliegende Recherchenbericht wurde für alle Patentansprüche erstellt

| Recherchenort | Abschlußdatum der Recherche | Prüfer |
|---|---|---|
| Den Haag | 17 April 91 | CAPOSTAGNO E. |